# EUROPÄISCHE PATENTANMELDUNG

(11) **EP 3 434 874 A1**
(43) Veröffentlichungstag der Anmeldung: **30.01.2019**
(21) Anmeldenummer: 17183623.2
(22) Anmeldetag: 27.07.2017
(51) Int. Cl.: F02B 25/14, F02D 19/06, F02D 19/08, F02D 41/30

(54) **VERFAHREN ZUM BETREIBEN EINES GROSSDIESELMOTORS, SOWIE GROSSDIESELMOTOR**

(71) Anmelder: Winterthur Gas & Diesel AG, 8401 Winterthur (CH)
(72) Erfinder: Schmid, Andreas, 8260 Stein am Rhein (CH)
(74) Vertreter: Intellectual Property Services GmbH

(57) **Zusammenfassung**

Es wird ein Verfahren vorgeschlagen zum Betreiben eines Grossmotors mit mindestens einem Zylinder (2), in welchem ein Kolben (3) entlang einer Zylinderachse (A) zwischen einem unteren und einem oberen Umkehrpunkt hin- und her bewegbar angeordnet ist, bei welchem Verfahren Spülluft (L) für die Verbrennung in den Zylinder (2) eingebracht wird, und nach Beendigung des Einbringens der Spülluft (L) ein erster, flüssiger und fremdgezündeter Brennstoff zur Bildung eines zündfähigen Brennstoff-Luft-Gemisches mittels einer ersten Einspritzdüse (41) in einen von dem Kolben (3) und einem Zylinderdeckel (5) begrenzten Brennraum (6) eingespritzt wird, wobei mit dem Einspritzen des ersten Brennstoffs bei einem ersten Kurbelwinkel begonnen wird, und wobei das Einspritzen bei einem zweiten Kurbelwinkel beendet wird, wobei der erste Kurbelwinkel mindestens 220° und höchstens 340° beträgt. Ferner wird ein Grossmotor vorgeschlagen, der mit einem solchen Verfahren betrieben wird.

## Beschreibung

Die Erfindung betrifft ein Verfahren zum Betreiben eines Grossmotors, sowie einen Grossmotor gemäss dem Oberbegriff des unabhängigen Anspruchs der jeweiligen Kategorie.

Grossmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betreib, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien. Grossmotoren haben typischerweise Zylinder, deren Innendurchmesser (Bohrung) mindestens 200 mm beträgt. Heutzutage werden Grossmotoren mit einer Bohrung von bis zu 960 mm oder sogar noch mehr eingesetzt.

Ein weiterer wichtiger Punkt ist seit einigen Jahren mit zunehmender Bedeutung die Qualität der Abgase, insbesondere die Stickoxid Konzentration in den Abgasen oder die Belastung mit Schwefel. Hier werden die rechtlichen Vorgaben und Grenzwerte für die entsprechenden Abgasgrenzwerte immer weiter verschärft. Das hat insbesondere bei Zweitakt-Grossdieselmotoren zur Folge, dass die Verbrennung des klassischen, mit Schadstoffen hoch belasteten Schweröls, aber auch die Verbrennung von Dieselöl oder anderen Brennstoffen problematischer wird, weil die Einhaltung der Abgasgrenzwerte immer schwieriger, technisch aufwendiger und damit teurer wird.

Unter den Aspekten des wirtschaftlichen und effizienten Betriebs, der Einhaltung von Abgasgrenzwerten und der Verfügbarkeit von Ressourcen sucht man daher nach Alternativen zum klassischerweise als Brennstoff für Grossmotoren verwendeten Schweröl. Dabei werden sowohl flüssige Brennstoffe eingesetzt, also Brennstoffe, die im flüssigen Zustand in den Brennraum eingebracht werden, als auch gasförmige Brennstoffe, also Brennstoffe, die im gasförmigen Zustand in den Brennraum eingebracht werden.

Beispiele für flüssige Brennstoffe als bekannte Alternativen zum Schweröl sind andere schwere Kohlenwasserstoffe, die insbesondere als Rückstände bei der Raffinerie von Erdöl übrig bleiben, Alkohole, insbesondere Methanol oder Ethanol, Benzin, Diesel, oder auch Emulsionen oder Suspensionen. So ist es z. B. bekannt, die als MSAR (Multiphase Superfine Atomised Residue) bezeichneten Emulsionen als Brennstoff zu verwenden. Dies sind im Wesentlichen Emulsionen aus einem schweren Kohlenwasserstoff, z. B. Bitumen, Schweröl oder ähnliches, und Wasser, die in speziellen Verfahren hergestellt werden. Eine bekannte Suspension ist diejenige aus Kohlenstaub und Wasser, die ebenfalls als Brennstoff für Grossmotoren eingesetzt wird. Als gasförmige Brennstoffe sind beispielsweise Erdgases wie LNG (liquefied natural gas) bekannt.

Eine ebenfalls bekannte Alternative zum reinen Betrieb mit Schweröl ist es, Grossmotoren so auszugestalten, dass sie mit zwei oder noch mehr unterschiedlichen Brennstoffen betrieben werden können, wobei der Motor je nach Betriebssituation oder Umgebung entweder mit dem einen Brennstoff oder mit dem anderen Brennstoff betrieben wird. Ein solcher Grossmotor kann während des Betriebs von einem ersten Modus, in welchem ein erster Brennstoff verbrannt wird, in einen zweiten Modus, in welchem ein zweiter Brennstoff verbrannt wird, umgeschaltet werden und umgekehrt.

Eine bekannte Ausgestaltung eines Grossmotors, der mit zwei unterschiedlichen Brennstoffen betrieben werden kann, ist der Motorentyp, für den heutzutage der Begriff "Dual-Fuel Motor" gebräuchlich ist. Diese Motoren sind einerseits in einem Gasmodus betreibbar, in welchem ein gasförmiger Brennstoff, z.B. Erdgas oder Methan, zur Verbrennung in den Brennraum eingebracht wird, und andererseits in einem Flüssigmodus, in welchem ein flüssiger Brennstoff wie Schweröl oder ein anderer flüssiger Brennstoffe in demselben Motor verbrannt werden können. Diese Grossmotoren können dabei sowohl Zweitakt- als auch Viertaktmotoren sein, insbesondere auch längsgespülte Zweitakt-Grossdieselmotoren.

Es sind auch solche Grossmotoren bekannt, die mit zwei unterschiedlichen flüssigen Brennstoffen betrieben werden können, wobei dabei üblicherweise beide Brennstoffe vorrätig sind, sodass der Motor auch während des Betriebs entweder mit dem ersten oder mit dem zweiten Brennstoff betreibbar ist.

Grossmotoren, die mit mindestens zwei oder auch mehr verschiedenen flüssigen oder gasförmigen Brennstoffen betrieben werden können, werden häufig, je nach aktuell verwendetem Brennstoff in unterschiedlichen Betriebsmodi betrieben. In dem häufig als Dieselbetrieb bezeichneten Betriebsmodus erfolgt die Verbrennung des Brennstoffs in der Regel nach dem Prinzip der Selbstzündung des Brennstoffs. In dem häufig als Ottobetrieb bezeichneten Modus erfolgt die Verbrennung durch die Fremdzündung eines zündfähigen Brennstoff-Luft-Gemisches. Diese Fremdzündung kann beispielsweise durch einen elektrischen Funken erfolgen, z. B. mit einer Zündkerze, oder auch durch die Selbstzündung einer kleinen eingespritzten Brennstoffmenge, welche dann die Fremdzündung eines anderen Brennstoffs bewirkt. Bei den oben genannten Dual-Fuel Motoren ist es beispielsweise für den Gasmodus bekannt, das Gas im gasförmigen Zustand mit der Spülluft zu vermischen, um so im Brennraum des Zylinders ein zündfähiges Gemisch zu erzeugen. Bei diesem Niederdruckverfahren erfolgt dann die Zündung des Gemisches im Zylinder üblicherweise, indem im richtigen Moment eine kleine Menge flüssiger Brennstoff in den Brennraum des Zylinders oder in eine Vorkammer eingespritzt wird, die dann zur Zündung des Luft-Gas-Gemisches führt.

Ferner sind auch Mischformen aus dem Ottobetrieb und dem Dieselbetrieb bekannt.

Im Allgemeinen ist der Dieselbetrieb durch eine Diffusionsverbrennung gekennzeichnet, während der Ottobetrieb durch ein mehr explosionsartiges Verbrennen des Brennstoff-Luft-Gemisches im Brennraum gekennzeichnet ist. Beim Dieselbetrieb ist man bemüht, den idealisierten Grenzwert einer Gleichdruckverbrennung anzunähern, bei welcher der gesamte Verbrennungsprozess bei konstantem Druck stattfindet. Beim Ottobetrieb ist man bemüht, den idealisierten Grenzwert einer Gleichraumverbrennung anzunähern, bei welcher der gesamte Verbrennungsprozess bei konstantem Volumen stattfindet.

Bei der Verwendung einiger flüssiger Brennstoffe, wie beispielsweise Ethanol, die im flüssigen Zustand in den Brennraum eingebracht werden, verdampft der Brennstoff im Brennraum, und bildet dabei mit der Spülluft ein zündfähiges Brennstoff-Luft-Gemisch. Die für die Verdampfung benötigte Verdampfungswärme, beispielsweise die Verdampfungsenthalpie, wird dabei dem Brennraum und insbesondere der Spülluft in Form von Wärmeenergie entzogen, was zu einer Temperaturerniedrigung führt. Wegen der dadurch bedingten Abkühlung der Spülluft werden solche im flüssigen Zustand eingespritzte Brennstoffe typischerweise fremdgezündet, insbesondere, um einen langen Zündverzug zu vermeiden. Die Zündung erfolgt dabei üblicherweise, nachdem der Kolben den oberen Umkehrpunkt (maximale Kompression) durchlaufen hat, damit der Verbrennungsprozess nicht gegen die Kolbenbewegung arbeitet. Dies hat aber zur Folge, dass ein Teil der Energie, die bei der Aufwärtsbewegung des Kolbens zur Kompression der Spülluft verwendet wird, für die Verdampfung des flüssigen Brennstoffs benötigt wird und daher für die vom Arbeitszyklus des Kolbens generierte Nutzarbeit verloren geht.

Ausgehend von diesem Stand der Technik ist es daher eine Aufgabe der Erfindung, ein Verfahren zum Betreiben eines Grossmotors vorzuschlagen, bei welchem ein flüssiger, fremdgezündeter Brennstoff verbrannt wird, und welches einen besonders effizienten und wirtschaftlichen Betrieb des Grossmotors ermöglicht. Insbesondere soll das Verfahren auch die effiziente Verbrennung solcher flüssiger Brennstoffe ermöglichen, die eine hohe Verdunstungswärme aufweisen, wie beispielsweise Ethanol. Auch soll das Verfahren sowohl für Grossmotoren geeignet sein, die nur mit einem Brennstoff betreibbar, als auch für Grossmotoren, die mit mehreren unterschiedlichen Brennstoffen betreibbar sind. Ferner ist es eine Aufgabe der Erfindung, einen entsprechenden Grossmotor vorzuschlagen.

Die diese Aufgabe lösenden Gegenstände der Erfindung sind durch die Merkmale des unabhängigen Patentanspruchs der jeweiligen Kategorie gekennzeichnet.

Erfindungsgemäss wird also ein Verfahren vorgeschlagen zum Betreiben eines Grossmotors mit mindestens einem Zylinder, in welchem ein Kolben entlang einer Zylinderachse zwischen einem unteren und einem oberen Umkehrpunkt hin- und her bewegbar angeordnet ist, bei welchem Verfahren Spülluft für die Verbrennung in den Zylinder eingebracht wird, und nach Beendigung des Einbringens der Spülluft ein erster, flüssiger und fremdgezündeter Brennstoff zur Bildung eines zündfähigen Brennstoff-Luft-Gemisches mittels einer ersten Einspritzdüse in einen von dem Kolben und einem Zylinderdeckel begrenzten Brennraum eingespritzt wird, wobei mit dem Einspritzen des ersten Brennstoffs bei einem ersten Kurbelwinkel begonnen wird, und wobei das Einspritzen bei einem zweiten Kurbelwinkel beendet wird, wobei der erste Kurbelwinkel mindestens 220° und höchstens 340° beträgt.

Dadurch, dass mit dem Einspritzen des ersten Brennstoffs bereits bei einem Kurbelwinkel begonnen wird, der deutlich vor dem Kurbelwinkel liegt, bei welcher der Kolben sich im oberen Umkehrpunkt befindet, wird der erste flüssige Brennstoff zumindest hauptsächlich während der Aufwärtsbewegung (Kompressionsbewegung) des Kolbens eingebracht. Da für die Verdampfung des Brennstoffs Energie benötigt wird, reduziert sich die Temperatur der im Zylinder befindlichen Spülluft. Dies bewirkt, weil das Einbringen der Spülluft zu Beginn der Einspritzung bereits beendet ist, eine Reduktion des Drucks der Spülluft im Zylinder. Folglich reduziert sich auch die Arbeit - und damit die Energie - die für die (weitere) Kompression der Spülluft bzw. des Brennstoff-Luft-Gemisches im Zylinder benötigt wird. Hieraus resultiert ein deutlich effizienterer und wirtschaftlicherer Betrieb des Grossmotors, der sich beispielsweise in Form eines reduzierten Brennstoffverbrauchs zeigt.

Zudem ermöglicht die Abkühlung durch die Verdampfung des Brennstoffs eine Herabsetzung der Prozesstemperatur, wodurch sich die Bildung von Schadstoffen, insbesondere die Bildung von Stickoxiden reduziert. Durch das frühe Einbringen des Brennstoffs nähert man sich ferner einer vorgemischten Verbrennung, welche dem Ottobetrieb deutlich näher kommt als ein reiner Dieselbetrieb. Auch diese Tatsache wirkt sich vorteilhaft auf den Betrieb des Grossmotors aus, insbesondere im Hinblick auf die Umweltfreundlichkeit, weil hierdurch die Bildung von Stickoxiden, Feinstaub, Russ oder anderen schädlichen Aerosolen im Vergleich zum Dieselbetrieb deutlich reduziert wird.

Für einen besonders effizienten Betrieb ist es bevorzugt, dass der zweite Kurbelwinkel mindestens 270° beträgt und kleiner als 360° ist, vorzugsweise höchstens 320°, sodass das Einspritzen des ersten Brennstoffs beendet wird, bevor der Kolben den oberen Umkehrpunkt erreicht.

Gemäss einer bevorzugten Ausführungsform wird die erste Einspritzdüse derart angeordnet, dass der erste Brennstoff von einer Position in den Brennraum eingespritzt wird, die oberhalb des Kolbens oder oberhalb eines obersten Kolbenrings liegt, wenn sich der Kolben im oberen Umkehrpunkt befindet.

Um eine grosse Eindringtiefe des Brennstoffs in den Brennraum zu gewährleisten und damit eine möglichst gute Durchmischung des Brennstoffs mit der Spülluft, ist es eine vorteilhafte Massnahme, wenn der erste Brennstoff im Wesentlichen in Richtung der Zylinderachse in den Brennraum eingespritzt wird.

Aus den gleichen Gründen ist es eine weitere bevorzugte Massnahme, wenn der erste Brennstoff mit einem Einspritzdruck von mindestens 150 bar in den Brennraum eingespritzt wird, und vorzugsweise mit einem Einspritzdruck von mindestens 200 bar und höchstens 500 bar.

Ferner ist es bevorzugt, wenn der erste Kurbelwinkel, bei welchem das Einspritzen beginnt, abhängig von der Last gewählt wird, mit welcher der Grossmotor betrieben wird.

Dabei ist es vorteilhaft, wenn der erste Kurbelwinkel mindestens 220° und höchstens 250°, vorzugsweise etwa 230° beträgt, wenn der Grossmotor in einem Teillastbereich von höchsten 50%, vorzugsweise höchstens 25% der Volllast des Grossmotors betrieben wird.

Bezüglich höherer Lastbereiche ist es vorteilhaft, dass der erste Kurbelwinkel mindestens 250°, vorzugsweise etwa 270° beträgt, wenn der Grossmotor in einem Teillastbereich von mindestens 75% der Volllast des Grossmotors betrieben wird.

Da bei dem erfindungsgemässe Verfahren vorzugsweise keine Diffusionsverbrennung nach dem Dieselprinzip erfolgen und der erste Brennstoff fremdgezündet werden soll, ist als erster Brennstoff ein solcher bevorzugt, der zündunwillig ist, um eine Selbstzündung des Brennstoffs möglichst zu vermeiden. Daher ist es bevorzugt, wenn der erste Brennstoff eine Oktanzahl von mindestens 80 aufweist oder eine Cetanzahl von höchstens 25.

Bevorzugt ist es, wenn der erste Brennstoff ein Alkohol ist, insbesondere Ethanol, Methanol oder ein Butanol, oder wenn der erste Brennstoff ein Keton ist, insbesondere Aceton, Butanon oder ein Methylketon, oder wenn der erste Brennstoff Benzin oder Flugbenzin oder Kerosin oder ein niedrig siedendes Lösungsmittel ist.

In einer besonders bevorzugten Ausführungsform wird der Grossmotor alternativ mit einem zweiten Brennstoff betrieben, welcher verschieden ist von dem ersten Brennstoff, wobei der zweite Brennstoff mittels einer zweiten Einspritzdüse in den Brennraum eingespritzt wird, und wobei die zweite Einspritzdüse von der ersten Einspritzdüse verschieden ist. Dabei kann der zweite Brennstoff ein flüssiger oder ein gasförmiger Brennstoff sein.

Vorzugsweise ist der zweite Brennstoff ein selbstzündender Brennstoff, insbesondere Schweröl, Dieselöl oder ein anderer Brennstoff, mit welchem ein Dieselbetrieb bzw. eine Diffusionsverbrennung im Brennraum möglich ist.

Durch die Erfindung wird ferner ein Grossmotor vorgeschlagen, mit mindestens einem Zylinder, in welchem ein Kolben entlang einer Zylinderachse zwischen einem unteren und einem oberen Umkehrpunkt hin- und her bewegbar angeordnet ist, mit einem Zylinderdeckel, welcher gemeinsam mit dem Kolben einen Brennraum begrenzt, und mit einer ersten Einspritzdüse zum Einspritzen eines ersten, flüssigen und fremdgezündeten Brennstoffs in den Brennraum, wobei der Zylinder Spülluftöffnungen zum Zuführen von Spülluft in den Zylinder aufweist, und wobei der Grossmotor mit einem erfindungsgemässen Verfahren betrieben wird.

Die Vorteile des erfindungsgemässen Grossmotors entsprechen denjenigen, die bereits im Zusammenhäng mit dem erfindungsgemässen Verfahren erläutert sind.

Vorzugsweise ist der Grossmotor so ausgestaltet, dass er mit mindestens zwei verschiedenen Brennstoffen betreibbar ist.

Insbesondere ist eine Ausgestaltungen des Grossmotors bevorzugt mit einer zweiten Einspritzdüse zum Einspritzen eines zweiten flüssigen Brennstoffs in den Brennraum, wobei die erste Einspritzdüse mindestens eine erste Düsenöffnung aufweist, durch welche der erste Brennstoff in den Brennraum einbringbar ist, und wobei die zweite Einspritzdüse mindestens eine zweite Düsenöffnung aufweist, durch welche der zweite Brennstoff in den Brennraum einbringbar ist, und wobei der Durchmesser der ersten Düsenöffnung grösser ist als der Durchmesser der zweiten Düsenöffnung.

Vorteilhafterweise beträgt dabei der Durchmesser der ersten Düsenöffnung 0.5 mm bis 3 mm, und der Durchmesser der zweiten Düsenöffnung beträgt 0.4 mm bis 1.9 mm.

Bevorzugt ist der Grossmotor ausgestaltet als längsgespülter Zweitakt-Grossdieselmotor. Ein solcher ist dann wahlweise in einem Dieselbetrieb betreibbar, in welchem ein selbstzündender Brennstoff, insbesondere Schweröl oder Dieselöl als zweiter Brennstoff in den Brennraum eingebracht wird, oder in einem Betrieb, in welchem ein flüssiger und fremdgezündeter Brennstoff als erster Brennstoff in den Brennraum des Zylinders eingebracht wird.

Weitere vorteilhafte Massnahmen und Ausgestaltungen der Erfindung ergeben sich aus den abhängigen Ansprüchen.

Im Folgenden wird die Erfindung sowohl in apparativer als auch in verfahrenstechnischer Hinsicht anhand von Ausführungsbeispielen und anhand der Zeichnung näher erläutert. In der Zeichnung zeigt:

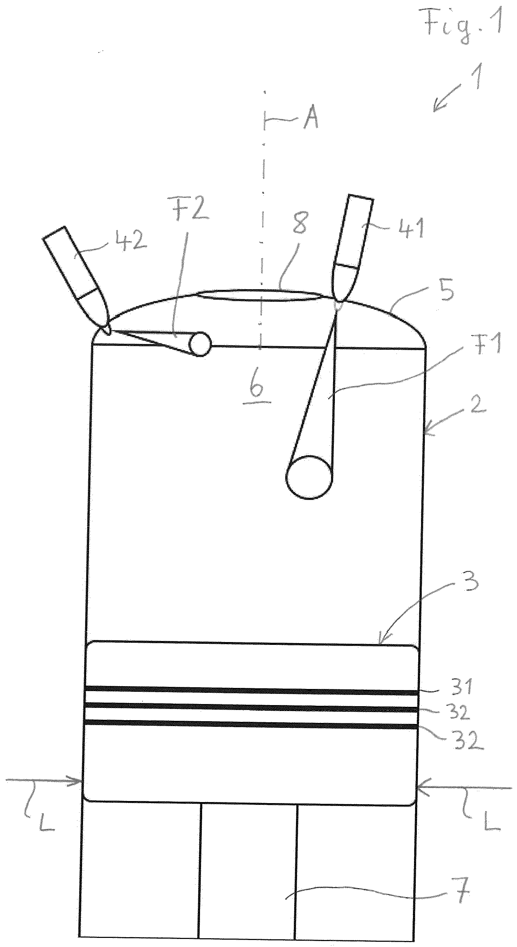

- Fig. 1:: eine schematische Darstellung eines Ausführungsbeispiels eines erfindungsgemässen Grossmotors zur Durchführung eines Ausführungsbeispiels eines erfindungsgemässen Verfahrens.

Fig. 1 zeigt in einer schematischen Darstellung ein Ausführungsbeispiel eines erfindungsgemässen Grossmotors, der gesamthaft mit dem Bezugszeichen 1 bezeichnet ist. Da es für das Verständnis ausreichend ist, ist in Fig. 1 nur einer der üblicherweise mehreren Zylinder 2 des Grossmotors 1 dargestellt. Die Zylinderachse des Zylinders 2 ist mit dem Bezugszeichen A bezeichnet.

Mit dem Begriff "Grossmotor" sind solche Motoren gemeint, wie sie üblicherweise als Hauptantriebsaggregate für Schiffe oder auch im stationären Betrieb, z.B. zum Antrieb grosser Generatoren zur Erzeugung elektrischer Energie eingesetzt werden. Typischerweise haben die Zylinder 2 eines Grossmotors 1 jeweils einen Innendurchmesser (Bohrung), der mindestens etwa 200 mm beträgt.

Der Grossmotor 1 kann als Viertakt- oder als Zweitakt-Motor ausgestaltet sein. Insbesondere kann der Grossmotor als Grossdieselmotor ausgestaltet sein, speziell als längsgespülter Zweitakt-Grossdieselmotor. Mit dem Begriff "Grossdieselmotor" sind dabei solche Grossmotoren gemeint, die in einem Dieselbetrieb betreibbar sind. Der Dieselbetrieb ist im idealisierten Grenzfall ein Gleichdruckprozess (Gleichdruckverbrennung), der auf einer Diffusionsverbrennung basiert. Im Dieselbetrieb erfolgt die Verbrennung des Brennstoffs üblicherweise nach dem Prinzip der Selbstzündung. Im Rahmen dieser Anmeldung sind mit dem Begriff "Grossdieselmotor" auch solche Grossmotoren gemeint, die ausser im Dieselbetrieb, alternativ auch in einem Ottobetrieb betrieben werden können. Der Ottobetrieb ist im idealisierten Grenzfall ein Gleichraumprozess (Gleichraumverbrennung), bei welchem die Verbrennung typischerweise nach dem Prinzip der Fremdzündung des Brennstoffs erfolgt. Auch ist es möglich, dass der Grossdieselmotor in Mischformen aus dem Dieselbetrieb und dem Ottobetrieb betrieben werden kann.

Ferner wird mit dem Begriff "fremdgezündeter Brennstoff" ein solcher Brennstoff bezeichnet, der bestimmungsgemäss durch Fremdzündung im Zylinder 2 verbrennt, bei welchem also bestimmungsgemäss eine Selbstzündung vermieden werden soll. Im Unterschied dazu wird mit einem "selbstzündenden Brennstoff" ein solcher Brennstoff bezeichnet, der bestimmungsgemäss durch Selbstzündung im Zylinder 2 verbrennt, also beispielsweise Schweröl oder Dieselbrennstoff.

Als "flüssiger Brennstoff" wird ein Brennstoff bezeichnet, der im flüssigen Zustand in den Zylinder 2 eingebracht wird. Als "gasförmiger Brennstoff" wird ein Brennstoff bezeichnet, der im gasförmigen Zustand in den Zylinder 2 eingebracht wird.

Bei der folgenden Beschreibung der Erfindung wird mit beispielhaftem Charakter auf den für die Praxis wichtigen Fall eines Grossdieselmotors Bezug genommen, der als längsgespülter Zweitakt-Grossdieselmotor 1 ausgestaltet ist, und der als Hauptantriebsaggregat eines Schiffes verwendet wird. Dieser Grossdieselmotor 1 ist dabei zumindest mit zwei unterschiedlichen Brennstoffen betreibbar. In einem ersten Betriebsmodus, der als Ottobetrieb bezeichnet wird, wird der Grossdieselmotor 1 mit einem ersten Brennstoff betrieben, der ein flüssiger und fremdgezündeter Brennstoff ist, beispielsweise Ethanol oder Methanol. In einem zweiten Betriebsmodus, der als Dieselbetrieb bezeichnet wird, wird der Grossdieselmotor 1 mit einem zweiten Brennstoff betrieben, der ein flüssiger und selbstzündender Brennstoff ist, beispielsweise Schweröl oder Dieselöl. Der Grossdieselmotor 1 kann während des Betriebs vom Ottobetrieb in den Dieselbetrieb umgeschaltet werden und umgekehrt.

Es versteht sich, dass die Erfindung nicht auf diesen Typ von Grossdieselmotor 1 und auf diese Verwendung beschränkt ist, sondern Grossmotoren im Allgemeinen betrifft. Dabei ist es auch möglich, dass der Grossmotor nur für die Verbrennung eines einzigen Brennstoffs, nämlich des ersten Brennstoffs, ausgestaltet ist. Dieser erste Brennstoff kann dann beispielsweise ein Alkohol, insbesondere Ethanol oder Methanol sein. Auch ist es möglich, dass der Grossmotor 1 als Multi-Fuel Motor für die Verbrennung von mehr als zwei Brennstoffen ausgestaltet ist.

Während der erste Brennstoff erfindungsgemäss ein flüssiger Brennstoff ist, kann der zweite bzw. jeder weitere Brennstoff jeweils ein flüssiger oder ein gasförmiger Brennstoff sein.

In jedem Zylinder 2 des Grossdieselmotors 1 (siehe Fig. 1) ist jeweils ein Kolben 3 vorgesehen, der jeweils in Richtung der Zylinderachse A zwischen einem oberen und einem unteren Umkehrpunkt hin- und her bewegbar angeordnet ist, und dessen Oberseite gemeinsam mit einem Zylinderdeckel 5 einen Brennraum 6 begrenzt. Der Kolben 3 kann optional in an sich bekannter Weise einen oder mehrere Kolbenringe 31, 32 umfassen, wobei der dem Brennraum 6 am nächsten liegende Kolbenring 31 als oberster Kolbenring 31 bezeichnet wird.

Der Kolben 3 ist in an sich bekannter Weise über eine Kolbenstange 7 mit einem Kreuzkopf (nicht dargestellt) verbunden, welcher über eine Schubstange (nicht dargestellt) mit einer Kurbelwelle (nicht dargestellt) verbunden ist, sodass die Bewegung des Kolbens 3 über die Kolbenstange 7, den Kreuzkopf und die Schubstange auf die Kurbelwelle übertragen wird, um diese zu drehen.

In den Brennraum 6 kann mittels einer ersten Einspritzdüse 41 der erste Brennstoff eingespritzt werden. Mittels einer zweiten Einspritzdüse 42 kann der zweite Brennstoff, welcher verschieden ist von dem ersten Brennstoff, in den Brennraum 6 eingespritzt werden. Beide Einspritzdüsen 41 und 42 sind bei diesem Ausführungsbeispiel im Zylinderdeckel 5 angeordnet. Im Ottobetrieb wird die erste Einspritzdüse 41 genutzt, um den ersten Brennstoff in den Brennraum 6 einzubringen, und im Dieselbetrieb wird die zweite Einspritzdüse 42 genutzt, um den zweiten Brennstoff in den Brennraum 6 einzubringen. Es können natürlich auch an jedem Zylinder 2 jeweils mehrere erste und/oder mehrere zweite Einspritzdüsen 41, 42 zum Einspritzen des jeweiligen Brennstoffs in den Brennraum 6 vorgesehen sein.

Der weitere Aufbau und die einzelnen Komponenten des Grossdieselmotors 1, wie beispielsweise Einzelheiten des Einspritzsystems, das Gaswechselsystem, das Abgassystem oder das Turboladersystem für die Bereitstellung der Spül- bzw. Ladeluft, sowie das Kontroll- und Steuerungssystem für einen Grossdieselmotor 1 sind dem Fachmann sowohl für die Ausgestaltung als Zweitaktmotor als auch für die Ausgestaltung als Viertaktmotor hinlänglich bekannt und bedürfen daher hier keiner weiteren Erläuterung.

Bei dem hier beschriebenen Ausführungsbeispiel eines längsgespülten Zweitakt-Grossdieselmotors 1 sind üblicherweise im unteren Bereich eines jeden Zylinders 2 bzw. Zylinderliners Spülluftöffnungen, beispielsweise ausgestaltet als Spülluftschlitze, zum Zuführen von Spülluft L in den Zylinder 2 vorgesehen, wobei die Spülluftöffnungen durch die Bewegung des Kolbens 3 im Zylinder 2 periodisch verschlossen und geöffnet werden, sodass die von dem Turbolader unter einem Ladedruck bereitgestellte Spülluft durch die Spülluftschlitze in den Zylinder 2 einströmen kann, solange diese geöffnet sind. Die Spülluftöffnungen sind in Fig. 1 nicht im Detail dargestellt, sondern lediglich durch die beiden Pfeile L angedeutet, welche die dem Zylinder 2 zuführbare Spülluft symbolisch darstellen. Im Zylinderdeckel 5 ist ein meistens zentral angeordnetes Auslassventil 8 vorgesehen, durch welches die Verbrennungsgase nach dem Verbrennungsprozess aus dem Zylinder 2 in das Abgassystem ausgetragen werden können.

Das Kontroll- und Steuerungssystem ist in modernen Grossdieselmotoren ein elektronisches System, mit welchem sich üblicherweise alle Motor- oder Zylinderfunktionen, insbesondere die Einspritzung (Beginn und Ende der Einspritzung) und die Betätigung des Auslassventils, einstellen oder steuern bzw. regeln lassen.

Im Folgenden wird nun der Betrieb des Grossdieselmotors 1 im Ottobetrieb beschrieben, bei welchem mittels der ersten Einspritzdüse 41 der erste Brennstoff in den Brennraum 6 eingebracht wird. Der erste Brennstoff ist ein flüssiger, fremdgezündeter Brennstoff, beispielsweise Ethanol. Im Folgenden wird mit beispielhaftem Charakter darauf Bezug genommen, dass der erste Brennstoff Ethanol ist.

Die Position des Kolbens 3 im Zylinder 2 wird üblicherweise durch den Kurbelwinkel angegeben, wobei sich ein Arbeitszyklus des Kolbens 3 über einen Kurbelwinkelbereich von 360° erstreckt. Der Kurbelwinkel 0° bzw. 360° ist dabei so festgelegt, dass sich der Kolben 3 bei dem Kurbelwinkel 0° bzw. 360° im oberen Umkehrpunkt seiner Bewegung befindet, d. h. das Volumen des Brennraums 6 ist beim Kurbelwinkel 0° bzw. 360° minimal. Dies entspricht dem Zustand maximaler Kompression. Beim Kurbelwinkel 180° befindet sich der Kolben 3 gerade in seinem unteren Umkehrpunkt. Die Abwärtsbewegung des Kolbens 3 (Expansionshub) findet also im Kurbelwinkelbereich von 0° bis 180° statt, die Aufwärtsbewegung des Kolbens 3 (Kompressionshub) findet im Kurbelwinkelbereich zwischen 180° und 360° statt.

Nach erfolgter Verbrennung im Brennraum 3 wird während der Abwärtsbewegung des Kolbens 3 bei einem vorgebbaren Kurbelwinkel zwischen 0° und 180° das Auslassventil 8 - gesteuert von dem Kontroll- und Steuerungssystem - geöffnet, sodass die Verbrennungsgase aus dem Brennraum 6 in das Abgassystem entweichen können. Bei der weiteren Abwärtsbewegung des Kolbens 3 gibt dieser die Spülluftöffungen frei, sodass frische Spülluft L in den Zylinder 2 einströmen kann. Der Kolben durchläuft bei dem Kurbelwinkel 180° den unteren Umkehrpunkt, und anschliessend beginnt der Kompressionshub, bei welchem sich der Kolben 3 aufwärts bewegt. Während der Aufwärtsbewegung verschliesst der Kolben 3 die Spülluftöffnungen wieder, wodurch das Einbringen der Spülluft L in den Zylinder 2 beendet wird. Bei einem vorgebbaren Kurbelwinkel wird während des Kompressionshubs das Auslassventil 8 - gesteuert von dem Kontroll- und Steuerungssystem - geschlossen und die Kompression der Spülluft L im Zylinder 2 beginnt. Bei einem vorgebbaren ersten Kurbelwinkel wird gesteuert von dem Kontroll- und Steuerungssystem - mit dem Einspritzen des ersten Brennstoffs in den Brennraum 6 mittels der ersten Einspritzdüse 41 begonnen. Das Einspritzen des ersten Brennstoffs wird bei einem zweiten Kurbelwinkel beendet. Auch dies erfolgt, indem das Kontroll- und Steuerungssystem ein entsprechendes Signal sendet, welches die Beendigung der Einspritzung durch die erste Einspritzdüse 41 verursacht.

Durch das Einspritzen des ersten Brennstoffs in den Brennraum 6 bzw. die darin befindliche Spülluft L bildet sich im Brennraum 6 ein zündfähiges Brennstoff-Luft-Gemisch, welches bei einem vorgebbaren Kurbelwinkel fremdgezündet wird. Üblicherweise erfolgt die Fremdzündung des Brennstoff-Luft-Gemisches, wenn sich der Kolben 3 im Bereich seines oberen Umkehrpunktes (Kurbelwinkel 0° bzw. 360°) befindet, und typischerweise kurz nachdem der Kolben 3 den oberen Umkehrpunkt durchlaufen hat. Nun beginnt der beschriebene Arbeitszyklus wieder.

Erfindungsgemäss ist der erste Kurbelwinkel, also der Kurbelwinkel, bei welchem das Einspritzen des ersten Brennstoffs in den Brennraum 6 beginnt, mindestens 220° und höchstens 340°, das heisst, mit dem Einspritzen des ersten Brennstoffs wird begonnen deutlich bevor der Kolben den oberen Umkehrpunkt erreicht. Dabei wird mit dem Einspritzen des ersten Brennstoffs erst nach Beendigung des Einbringens der Spülluft L begonnen.

Bezüglich des hier beschriebenen Ausführungsbeispiels heisst dies, dass mit dem Einspritzen des ersten Brennstoffs erst begonnen wird, nachdem der Kolben 3 bei seiner Aufwärtsbewegung die Spülluftöffnungen wieder verschlossen hat. Ferner wird mit dem Einspritzen des ersten Brennstoffs auch erst dann begonnen, wenn das Auslassventil 8 geschlossen ist.

Bezüglich des zweiten Kurbelwinkels, also des Kurbelwinkels, bei welchem das Einspritzen des ersten Brennstoffs in den Brennraum 6 beendet wird, ist es bevorzugt, aber keinesfalls notwendig, wenn der zweite Kurbelwinkel mindestens 270° beträgt und kleiner als 360° ist, sodass das Einspritzen des ersten Brennstoffs beendet wird, bevor der Kolben 3 den oberen Umkehrpunkt erreicht. Besonders bevorzugt ist der zweite Kurbelwinkel höchstens 320°.

Die bevorzugten Bereiche für den ersten Kurbelwinkel sind diejenigen, die sich unmittelbar an das Schliessen des Auslassventils 8 und/oder an das Verschliessen der Spülluftöffnungen durch den Kolben 3 anschliessen, d. h. es ist bevorzugt, wenn der erste Kurbelwinkel einen möglichst kleinen Wert hat.

Da üblicherweise der Kurbelwinkel, bei welchem das Auslassventil 8 verschlossen wird, von der jeweiligen Last abhängen kann, mit welcher der Grossmotor 1 aktuell betrieben wird, sind auch die bevorzugten Bereiche für den ersten Kurbelwinkel vorzugsweise lastabhängig.

Wenn der Grossmotor 1 in einem Teillastbereich von höchstens 50% und insbesondere von höchsten 25% der Volllast des Grossmotors 1 betrieben wird, ist der erste Kurbelwinkel bevorzugt mindestens 220° und höchstens 250°, wobei ein Wert von 230° oder etwa 230° für den ersten Kurbelwinkel besonders bevorzugt ist.

Wenn der Grossmotor 1 in einem Teillastbereich von mindestens 75% der Volllast des Grossmotors 1 betrieben wird oder mit Volllast betrieben wird, ist der erste Kurbelwinkel bevorzugt mindestens 250°, wobei ein Wert von 270° oder etwa 270° für den ersten Kurbelwinkel besonders bevorzugt ist.

Durch das sehr frühe Einspritzen des ersten Brennstoffs kann die Verdampfungswärme bzw. die Verdampfungsenthalpie des ersten Brennstoffs in vorteilhafter Weise genutzt werden, um die Spülluft bzw. das sich ausbildende Brennstoff-Luft-Gemisch im Brennraum 6 des Zylinders 2 abzukühlen. Der im flüssigen Zustand eingespritzte erste Brennstoff, also beispielsweise Ethanol, benötigt Energie (Verdampfungswärme) um vom flüssigen in den gasförmigen Zustand überzugehen. Diese Energie wird der im Zylinder befindlichen Spülluft bzw. dem im Zylinder befindlichen Gas in Form von Wärme entzogen, wodurch sich die Temperatur des Gases im Zylinder 2 erniedrigt. Diese Temperaturerniedrigung bewirkt eine Abnahme des Drucks im Zylinder 2, wodurch weniger Arbeit benötigt wird, um während des Kompressionshubs das Gas bzw. das Brennstoff-Luft-Gemisch im Zylinder 2 zu komprimieren. Diese weniger benötigte Arbeit führt zu einem deutlich effizienteren Betrieb des Grossmotors 1, beispielsweise zu einem reduzierten Brennstoffverbrach.

Insbesondere solche ersten Brennstoffe, wie z.B. Ethanol, die eine grosse Verdampfungswärme haben, sind geeignet um diese vorteilhafte Abkühlung der Spülluft L bzw. des Gases im Zylinder 2 möglichst ausgeprägt zu bewirken.

Aufgrund des im Vergleich zu bekannten Verfahren sehr frühen Einspritzbeginns für den ersten Brennstoff ist es vorteilhaft, auch im Hinblick auf die Bildung eines möglichst homogenen Brennstoff-Luft-Gemisches, wenn der erste Brennstoff derart in den Brennraum 6 eingebracht wird, dass er möglichst tief - bezüglich der durch die Zylinderachse A festgelegten Richtung - in den Brennraum 6 eindringt, das heisst der erste Brennstoff sollte vorzugsweise möglichst weit in Richtung auf den Kolben 3 in den Brennraum vordringen.

Um dies zu realisieren sind verschiedene bevorzugte Massnahmen möglich: Vorzugsweise wird der erste Brennstoff im Wesentlichen in Richtung der Zylinderachse A in den Brennraum 6 eingespritzt. Dies ist in Fig. 1 durch den Brennstoffstrahl F1 dargestellt. Dabei muss das Einspritzen nicht exakt in Richtung der Zylinderachse A erfolgen. Es ist auch möglich, wie in Fig. 1 dargestellt, dass der erste Brennstoff unter einem kleinen Winkel von beispielsweise bis zu 20° relativ zur Zylinderachse A eingespritzt wird.

Ferner ist es vorteilhaft, wenn die erste Einspritzdüse 41 derart angeordnet wird, dass der erste Brennstoff von einer Position in den Brennraum 6 eingespritzt wird, die oberhalb des Kolbens 3 oder oberhalb des obersten Kolbenrings 31 liegt, wenn sich der Kolben im oberen Umkehrpunkt befindet. Dazu kann die erste Einspritzdüse 41 - wie in Fig. 1 gezeigt - im Zylinderdeckel 5 beispielsweise neben dem zentral angeordneten Auslassventil 8 angeordnet werden. Es ist aber auch möglich, die erste Einspritzdüse 41 seitlich im Zylinderdeckel 5 oder in der Seitenwand des Zylinders 2 anzuordnen. In diesem Falle ist es bevorzugt, dass die Düsenöffnung, durch welche der erste Brennstoff aus der ersten Einspritzdüse 41 austritt, so ausgerichtet wird, dass der erste Brennstoff im Wesentlichen in Richtung der Zylinderachse A oder nur leicht geneigt gegen diese, aus der ersten Einspritzdüse 41 austritt.

Eine weitere vorteilhafte Massnahme besteht darin, den ersten Brennstoff mit einem genügend grossen Einspritzdruck in den Brennraum einzuspritzen. Vorzugsweise wird der erste Brennstoff mit einem Einspritzdruck von mindestens 150 bar (15 MPa) in den Brennraum eingespritzt. Besonders bevorzugt ist der Einspritzdruck mindestens 200 Bar (20 MPa) und höchstens 500 bar (50 MPa).

Auch ist es eine bevorzugte Massnahme, wenn die erste Einspritzdüse 41 eine erste Düsenöffnung aufweist, durch welche der erste Brennstoff in den Brennraum 6 eingespritzt wird, wobei der Durchmesser der ersten Düsenöffnung grösser ist als bei herkömmlichen Einspritzdüsen für Schweröl oder Dieselöl. Bei dem hier beschriebenen Ausführungsbeispiel ist - wie bereits erläutert - die zweite Einspritzdüse 42 vorgesehen, mit welcher während des Dieselbetriebs der zweite Brennstoff, der hier ein selbstzündender Brennstoff wie Schweröl oder Diesel ist, eingespritzt wird. Diese zweite Einspritzdüse 42 weist mindestens eine zweite Düsenöffnung auf, durch welche der zweite Brennstoff in den Brennraum einbringbar ist. Insbesondere bei der Verwendung von Schweröl als zweitem Brennstoff beträgt der Durchmesser der zweiten Düsenöffnung beispielsweise 0.4 mm bis 1.9 mm, wobei der Durchmesser umso grösser ist, je grösser der Innendurchmesser (Bohrung) des Zylinders 2 ist. Bei einer kleineren Bohrung von beispielsweise 350 mm werden z. B. zweite Düsenöffnungen mit einem Durchmesser von 0.4 mm eingesetzt, während bei einer grösseren Bohrung von beispielsweise 920 mm zweite Düsenöffnungen mit einem Durchmesser von 1.825 mm oder 1.9 mm eingesetzt werden. Die ersten Düsenöffnungen der ersten Einspritzdüse 41 haben dann einen Durchmesser, der grösser ist als der Durchmesser der zweiten Düsenöffnungen der zweiten Einspritzdüse. Vorzugsweise ist der Durchmesser der ersten Düsenöffnungen der ersten Einspritzdüse 41 mindestens 20% grösser als der Durchmesser der zweiten Düsenöffnungen der zweiten Einspritzdüse 42. Auch bezüglich der ersten Düsenöffnungen nimmt typischerweise der Durchmesser mit zunehmendem Innendurchmesser (Bohrung) des Zylinders 2 zu. Für die erste Düsenöffnungen der ersten Einspritzdüse 41 ist es bevorzugt, wenn der Durchmesser des zweiten Düsenöffnung 0.5 mm bis 3.0 mm beträgt, wobei der kleinere Wert für kleinere Bohrungen von beispielsweise 350 mm bevorzugt ist und der grössere Wert für grössere Bohrungen von beispielsweise 920 mm.

Zur Fremdzündung des Brennstoff-Luft-Gemisches aus dem ersten Brennstoff und der Spülluft sind insbesondere alle an sich bekannten Arten der Fremdzündung möglich. So kann die Fremdzündung beispielsweise durch einen elektrischen Funken erfolgen, welcher von einer Zündkerze generiert wird. Es ist auch möglich - und insbesondere dann bevorzugt, wenn der zweite Brennstoff ein selbstzündender ist - die Fremdzündung dadurch zu bewirken, dass eine kleine Menge eines selbstzündenden Brennstoffs in den Brennraum 6 eingespritzt wird. Durch die Selbstzündung dieses Brennstoffs erfolgt dann die Fremdzündung des ersten Brennstoffs.

Falls der zweite Brennstoff - wie im hier beschriebenen Ausführungsbeispiel ein selbstzündender ist, kann die Fremdzündung dadurch bewirkt werden, dass mittels der zweiten Einspritzdüse 42 zu einem geeigneten Zeitpunkt eine kleine Menge des zweiten Brennstoffs in den Brennraum eingespritzt wird, der sich dann selbstentzündet und so die Fremdzündung des Brennstoff-Luft-Gemisches im Brennraum 6 bewirkt.

Es ist aber auch möglich, eine separate Einspritzvorrichtung für einen selbstzündenden Brennstoff vorzusehen, durch welche dann für die Fremdzündung des ersten Brennstoffs ein selbstzündender Brennstoff in den Brennraum 6 eingebracht wird.

Wird das hier beschriebene Ausführungsbeispiel des Grossmotors 1 in dem zweiten Betriebsmodus, also dem Dieselbetrieb betrieben, so wird der zweite Brennstoff, der hier ein flüssiger und selbstzündender Brennstoff ist, vorzugsweise Schweröl oder Dieselöl, mittels der zweiten Einspritzdüse 42 in den Brennraum 6 eingebracht. Dabei wird der zweite Brennstoff vorzugsweise in einer Richtung in den Brennraum 6 beingebracht, die im Wesentlichen senkrecht oder ungefähr senkrecht auf der Zylinderachse A steht. Dies ist in Fig. 1 durch einen Brennstoffstrahl F2 dargestellt. Da der Betrieb des Grossdieselmotors 1 in diesem Dieselbetrieb hinreichend bekannt ist, bedarf es hier keiner weiteren Erläuterung.

Da für den ersten Brennstoff eine Fremdzündung vorgesehen ist, d. h. eine Selbstzündung des ersten Brennstoffs soll möglichst vermieden werden, wird als erster Brennstoff vorzugsweise ein zündunwilliger Brennstoff verwendet. Dies ist insbesondere ein flüssiger Brennstoff, der eine Cetanzahl von höchstens 25 aufweist. Auch sind solche Brennstoffe als erste Brennstoffe bevorzugt, die eine Oktanzahl von mindestens 80 aufweisen, wobei mit der Oktanzahl die Research-Oktanzahl (ROZ) gemeint sind.

Insbesondere sind die folgenden Substanzen oder Mischungen dieser Substanzen als erster Brennstoff geeignet: Alkohole, insbesondere Ethanol, Methanol oder ein Butanol; Ketone, insbesondere Aceton, Butanon oder ein Methylketon; Benzin; Flugbenzin; Kerosin; niedrig siedende Lösungsmittel.

Als zweiter Brennstoff ist prinzipiell jeder zum Betreiben eines Grossmotors 1 geeignete flüssige oder gasförmige Brennstoff möglich wie beispielsweise Schweröl, Diesel, Erdgas, Methan, Emulsionen wie beispielsweise MSAR (Multiphase Superfine Atomised Residue), oder Suspensionen wie beispielsweise Kohlenstaub-Wasser-Suspensionen.

Falls der zweite Brennstoff ein gasförmiger ist, so ist es bevorzugt, wenn das Einspritzsystem für diesen Brennstoff als ein Niederdruck (low pressure) - Gassystem ausgestaltet ist. Damit ist gemeint, dass der Einspritzdruck, mit welchem der gasförmige zweite Brennstoff in den Brennraum 6 des jeweiligen Zylinders 2 eingespritzt wird, höchsten 100 bar (10 MPa) beträgt. Vorzugsweise ist der Einspritzdruck maximal 50 bar (5 MPa) und besonders bevorzugt höchstens 20 bar (2 MPa).

Wie bereits erwähnt betrifft die vorliegende Erfindung auch solche Grossmotoren, welche nur mit einem einzigen Brennstoff, nämlich dem ersten Brennstoff, betrieben werden oder betreibbar sind.

## Patentansprüche

1. Verfahren zum Betreiben eines Grossmotors mit mindestens einem Zylinder (2), in welchem ein Kolben (3) entlang einer Zylinderachse (A) zwischen einem unteren und einem oberen Umkehrpunkt hin- und her bewegbar angeordnet ist, bei welchem Verfahren Spülluft (L) für die Verbrennung in den Zylinder (2) eingebracht wird, und nach Beendigung des Einbringens der Spülluft (L) ein erster, flüssiger und fremdgezündeter Brennstoff zur Bildung eines zündfähigen Brennstoff-Luft-Gemisches mittels einer ersten Einspritzdüse (41) in einen von dem Kolben (3) und einem Zylinderdeckel (5) begrenzten Brennraum (6) eingespritzt wird, wobei mit dem Einspritzen des ersten Brennstoffs bei einem ersten Kurbelwinkel begonnen wird, und wobei das Einspritzen bei einem zweiten Kurbelwinkel beendet wird, **dadurch gekennzeichnet, dass** der erste Kurbelwinkel mindestens 220° und höchstens 340° beträgt.

2. Verfahren nach Anspruch 1, wobei der zweite Kurbelwinkel mindestens 270° beträgt und kleiner als 360° ist, vorzugsweise höchstens 320°, sodass das Einspritzen des ersten Brennstoffs beendet wird, bevor der Kolben (3) den oberen Umkehrpunkt erreicht.

3. Verfahren nach einem der vorangehenden Ansprüche, wobei die erste Einspritzdüse (41) derart angeordnet wird, dass der erste Brennstoff von einer Position in den Brennraum (6) eingespritzt wird, die oberhalb des Kolbens (3) oder oberhalb eines obersten Kolbenrings (31) liegt, wenn sich der Kolben (3) im oberen Umkehrpunkt befindet.

4. Verfahren nach einem der vorangehenden Ansprüche, bei welchem der erste Brennstoff im Wesentlichen in Richtung der Zylinderachse (A) in den Brennraum (6) eingespritzt wird.

5. Verfahren nach einem der vorangehenden Ansprüche, wobei der erste Brennstoff mit einem Einspritzdruck von mindestens 150 bar in den Brennraum (6) eingespritzt wird, und vorzugsweise mit einem Einspritzdruck von mindestens 200 bar und höchstens 500 bar.

6. Verfahren nach einem der vorangehenden Ansprüche, wobei der erste Kurbelwinkel mindestens 220° und höchstens 250°, vorzugsweise etwa 230° beträgt, wenn der Grossmotor in einem Teillastbereich von höchsten 50%, vorzugsweise höchstens 25% der Volllast des Grossmotors betrieben wird.

7. Verfahren nach einem der vorangehenden Ansprüche, wobei der erste Kurbelwinkel mindestens 250°, vorzugsweise etwa 270° beträgt, wenn der Grossmotor in einem Teillastbereich von mindestens 75% der Volllast des Grossmotors betrieben wird.

8. Verfahren nach einem der vorangehenden Ansprüche, bei welchem der erste Brennstoff eine Oktanzahl von mindestens 80 aufweist oder eine Cetanzahl von höchstens 25.

9. Verfahren nach einem der vorangehenden Ansprüche, wobei der erste Brennstoff ein Alkohol ist, insbesondere Ethanol, Methanol oder ein Butanol, oder wobei der erste Brennstoff ein Keton ist, insbesondere Aceton, Butanon oder ein Methylketon, oder wobei der erste Brennstoff Benzin oder Flugbenzin oder Kerosin oder ein niedrig siedendes Lösungsmittel ist.

10. Verfahren nach einem der vorangehenden Ansprüche, bei welchem der Grossmotor (1) alternativ mit einem zweiten Brennstoff betrieben wird, welcher verschieden ist von dem ersten Brennstoff, wobei der zweite Brennstoff mittels einer zweiten Einspritzdüse (42) in den Brennraum (6) eingespritzt wird, und wobei die zweite Einspritzdüse (42) von der ersten Einspritzdüse (41) verschieden ist.

11. Verfahren nach Anspruch 10, bei welchem der zweite Brennstoff ein selbstzündender Brennstoff ist.

12. Grossmotor mit mindestens einem Zylinder (2), in welchem ein Kolben (3) entlang einer Zylinderachse (A) zwischen einem unteren und einem oberen Umkehrpunkt hin- und her bewegbar angeordnet ist, mit einem Zylinderdeckel (5), welcher gemeinsam mit dem Kolben (3) einen Brennraum begrenzt (6), und mit einer ersten Einspritzdüse (41) zum Einspritzen eines ersten, flüssigen und fremdgezündeten Brennstoffs in den Brennraum (6), wobei der Zylinder (2) Spülluftöffnungen zum Zuführen von Spülluft (L) in den Zylinder (2) aufweist, **dadurch gekennzeichnet, dass** der Grossmotor mit einem Verfahren gemäss einem der vorangehenden Ansprüche betrieben wird.

13. Grossmotor nach Anspruch 12, mit einer zweiten Einspritzdüse (42) zum Einspritzen eines zweiten flüssigen Brennstoffs in den Brennraum (6), wobei die erste Einspritzdüse (41) mindestens eine erste Düsenöffnung aufweist, durch welche der erste Brennstoff in den Brennraum (6) einbringbar ist, und wobei die zweite Einspritzdüse (42) mindestens eine zweite Düsenöffnung aufweist, durch welche der zweite Brennstoff in den Brennraum (6) einbringbar ist, und wobei der Durchmesser der ersten Düsenöffnung grösser ist als der Durchmesser der zweiten Düsenöffnung.

14. Grossmotor nach Anspruch 12, wobei der Durchmesser der ersten Düsenöffnung 0.5 mm bis 3 mm beträgt, und wobei der Durchmesser der zweiten Düsenöffnung 0.4 mm bis 1.9 mm beträgt.

15. Grossmotor nach einem der Ansprüche 12-14, ausgestaltet als längsgespülter Zweitakt-Grossdieselmotor.
